# EUROPÄISCHE PATENTSCHRIFT

(11) **EP 2 797 805 B1**
(45) Veröffentlichungstag und Bekanntmachung des Hinweises auf die Patenterteilung: **16.03.2016**
(21) Anmeldenummer: 12810079.9
(22) Anmeldetag: 07.12.2012
(51) Int. Cl.: B62D 7/15, B62D 6/00

(54) **VORRICHTUNG FÜR EINEN EINE HINTERACHSLENKUNG AUFWEISENDEN KRAFTWAGEN UND VERFAHREN ZUM BETREIBEN EINES KRAFTWAGENS**
DEVICE FOR A MOTOR VEHICLE HAVING A REAR AXLE STEERING SYSTEM AND METHOD FOR OPERATING A MOTOR VEHICLE
DISPOSITIF POUR VÉHICULE À MOTEUR PRÉSENTANT UNE DIRECTION D'ESSIEU ARRIÈRE ET PROCÉDÉ POUR FAIRE FONCTIONNER UN VÉHICULE À MOTEUR

(30) Priorität: 27.12.2011 DE 102011122535
(43) Veröffentlichungstag der Anmeldung: 05.11.2014
(73) Patentinhaber: Audi AG, 85045 Ingolstadt (DE)
(72) Erfinder: AGOSTINI, Johannes, 85084 Reichertshofen (DE); MINNINGER, Arne, 85139 Wettstetten (DE)
(74) Vertreter: Engelhardt, Harald
(86) Internationale Anmeldenummer: PCT/EP2012/005060
(87) Internationale Veröffentlichungsnummer: WO 2013/097923

(56) Entgegenhaltungen:
- EP-A2- 1 388 474
- DE-A1-102004 035 004
- DE-A1-102008 007 139
- US-B1- 7 164 980

## Beschreibung

Die Erfindung betrifft ein Verfahren zum Betreiben eines Kraftwagens mit einer Hinterachslenkung sowie eine Vorrichtung für einen eine Hinterachslenkung aufweisenden Kraftwagen der im Oberbegriff des Patentanspruchs 7 angegebenen Art.

Bei schnelleren Lenkmanövern, bevorzugt aus einer Geradeausfahrt übergehend in eine Kurvenfahrt oder auch bei Übergängen von großen Radien in kleine Radien wirken unterschiedlich stark ausgeprägte Kräfte und Wahrnehmungen auf den Fahrer ein. Diese werden ab einer bestimmten Stärke, unter anderem in Abhängigkeit von der Lenkradwinkelbeschleunigung und der Lenkradwinkelgeschwindigkeit, als störend und unangenehm wahrgenommen. Speziell sei hier eine zeitliche Änderung der Querkraftbeschleunigung, welcher als Querkraftschlag oder Querruck bekannt ist, genannt. Ab einer bestimmten Stärke wird der Fahrer dadurch derart beeinflusst, dass die Führung des Kraftwagens beeinträchtigt bzw. eine Komfortbeeinträchtigung für den Fahrer entstehen werden kann. Ein ähnlicher Einfluss wird wahrgenommen, wenn nach einem schnelleren Lenkmanöver wieder aus einer Kurvenfahrt in eine geradlinige Bahnbewegung übergegangen wird oder auch bei einem Übergang von kleineren Radien zu größeren Radien. Diese beschriebenen Nachteile machen sich bei Kraftwagen mit einer so genannten Dynamiklenkung, bei welcher beispielsweise eine geschwindigkeitsabhängige Lenkübersetzung möglich ist, stärker bemerkbar als bei Fahrzeugen mit einer Standardlenkung.

Aus der DE 4305155 C2 ist eine Vorrichtung zur Regelung der Fahrdynamik eines Kraftwagens als bekannt zu entnehmen. Durch ein Verstellen der Hinterräder können die entsprechenden Schräglaufwinkel und somit auch die an den Hinterrädern auftretenden Querkräfte variiert werden, um stabilisierende oder agilisierende Giermomente auf den Kraftwagen auszuüben.

Die DE 10 2004 035 004 A1 offenbart ein Verfahren zur Erhöhung der Fahrstabilität eines Kraftwagens. Mittels einer modellgestützten Vorrichtung wird ein stabilisierendes Giermoment bestimmt, das auf das Kraftfahrzeug eingebracht wird, um eine Entkopplung zwischen der Längsdynamik und der Querdynamik des Kraftwagens durch ein zusätzliches Einlenken an der Hinterachse und/oder an der Vorderachse zu bewirken.

EP 1 388 474 offenbart ein Verfahren zum Betreiben eines Kraftwagens mit einer Hinterachslenkung, welches folgende Schritte umfasst:
- Bereitstellen von Daten, welche eine Betätigung einer Vorderachslenkung des Kraftwagens und eine Kraftwagenbewegung charakterisieren, mittels einer Sensoreinrichtung des Kraftwagens;
- Empfangen der Daten mittels einer Steuereinrichtung des Kraftwagens;
- Ermitteln eines zu erwartenden Verlaufs eines Querrucks des Kraftwagens basierend auf den Daten mittels der Steuereinrichtung.

Es ist die Aufgabe der vorliegenden Erfindung, eine verbesserte Vorrichtung und ein verbessertes Verfahren bereitzustellen, mittels welchem der Einfluss einer zeitlichen Änderung der Querbeschleunigung, welche bei Lenkmanövern auf einen Fahrer des Kraftwagens einwirkt, zu verringern und dadurch sowohl die Sicherheit beim Betreiben des Kraftwagens als auch den Fahrkomfort zu erhöhen.

Diese Aufgabe wird durch ein Verfahren zum Betreiben eines Kraftwagens mit einer Hinterachslenkung mit den Merkmalen des Patentanspruchs 1 und einer Vorrichtung für einen eine Hinterachslenkung aufweisenden Kraftwagen mit den Merkmalen des Patentanspruchs 7 gelöst. Vorteilhafte Ausgestaltungen mit zweckmäßigen und nicht-trivialen Weiterbildungen der Erfindung sind in den abhängigen Ansprüchen angegeben.

Ein erfindungsgemäßes Verfahren zum Betreiben eines Kraftwagens mit einer Hinterachslenkung umfasst die folgenden Schritte:
- Bereitstellen von Daten, welche eine Betätigung einer Vorderachslenkung des Kraftwagens und eine Kraftwagenbewegung charakterisieren, mittels einer Sensoreinrichtung des Kraftwagens;
- Empfangen der Daten mittels einer Steuereinrichtung des Kraftwagens;
- Ermitteln eines zu erwartenden Verlaufs eines Querrucks des Kraftwagens basierend auf den Daten mittels der Steuereinrichtung;
- Bestimmen, ob der ermittelte zu erwartende Verlauf des Querrucks einen vorgegebenen Schwellwert für den Querruck überschreitet, mittels der Steuereinrichtung; und
- Verändern eines Hinterachslenkwinkels der Hinterachslenkung des Kraftwagens mittels der Steuereinrichtung, falls der Verlauf des ermittelten zu erwartenden Querrucks den vorgegebenen Schwellwert überschreitet.

Mit anderen Worten werden mittels einer Sensoreinrichtung des Kraftwagens Messgrößen erfasst, welche eine Betätigung der Vorderachslenkung des Kraftwagens und die Kraftwagenbewegung selbst charakterisieren. Basierend auf diesen Daten kann die Steuereinrichtung des Kraftwagens ermitteln, was für ein Querbeschleunigungsverlauf, beispielsweise bei einer entsprechenden Kurvenfahrt, zu erwarten ist. Basierend auf der Kenntnis des Querbeschleunigungsverlaufs kann die Steuereinrichtung eine zeitliche Änderung der Querbeschleunigung, also deren zeitliche Ableitung, ermitteln. Die zeitliche Ableitung einer Beschleunigung wird gemeinhin als Ruck bezeichnet, weshalb im vorliegenden Fall ein zu erwartender Verlauf des Querrucks des Kraftwagens von der Steuereinrichtung ermittelt werden kann.

Aufgrund von bei Kraftwagen üblicherweise gegebenen Elastizitäten und Trägheiten folgt der Kraftwagen nicht unmittelbar einer Lenkbewegung, so dass die aus einer Lenkbewegung resultierende Querbeschleunigung bzw. Querbeschleunigungsänderung ebenfalls zeitverzögert auftritt. Je nach Fahrzeug und gegebenen Randbedingungen betragen die zeitlichen Verzögerungen zwischen einer Betätigung der Lenkung und den infolgedessen auftretenden Querbeschleunigungen bzw. Querbeschleunigungsänderungen bis zu 500 ms. Somit kann also gewissermaßen vorausschauend ermittelt werden, ob der bestimmte erwartete Verlauf des Querrucks einen vorgegebenen Schwellwert überschreitet, so dass noch genügend Zeit bleibt, den Hinterachslenkwinkel der Hinterachslenkung des Kraftwagens mittels der Steuereinrichtung entsprechend zu betätigen und zu verändern, falls der Verlauf des ermittelten zu erwartenden Querrucks den vorgegebenen Schwellwert überschreiten sollte. Diese kurzfristige zusätzliche Veränderung des Lenkwinkels an der Hinterachse, welche üblicherweise gleichsinnig oder gegensinnig mit dem Lenkwinkel an der Vorderachse erfolgt, wird unmittelbar mit dem zu erwartenden den vorgegebenen Schwellwert überschreitenden Querruck oder Querkraftschlag vollzogen. Vorzugsweise wird unmittelbar nach diesem Vorgang der Spurwinkel wieder auf einen üblichen Standardwert zurückverstellt.

Insbesondere bei sportlicher oder besonders dynamischer Fahrweise, welche beispielsweise durch höhere Gradienten der Lenkwinkelgeschwindigkeit charakterisiert sind, können dadurch sanftere Übergänge der unterschiedlichen Fahrzustände, beispielsweise zwischen Geradeausfahrten und Kurvenfahrt oder einer Kurvenfahrt mit kleinem Radius zu einer Kurvenfahrt mit großem Radius, eine Reduzierung der auf das Fahrzeug und somit auch auf den Fahrer einwirkenden Querbeschleunigungsänderungen erzielt werden. Aufgrund der harmonischeren Übergänge der auf den Kraftwagen und den Fahrer einwirkenden Querbeschleunigungen bzw. Querkräfte kann eine bessere Beherrschbarkeit des Kraftwagens erzielt werden. Weiterhin können dadurch auch höhere Kurvengeschwindigkeiten, insbesondere bei Kraftwagen mit einer so genannten Dynamiklenkung, erzielt werden.

Somit sind eine verbesserte Vorrichtung und ein verbessertes Verfahren geschaffen, mittels welchem der Einfluss einer Änderung der Querbeschleunigung, die bei Lenkmanövern auf einen Fahrer des Kraftwagens einwirkt, verringert wird, wodurch sowohl die Sicherheit beim Betreiben des Kraftwagens als auch der Fahrkomfort erhöht wird. Plötzliche und/oder besonders starke zeitliche Änderungen der Querbeschleunigung bzw. der daraus resultierenden Krafteinwirkungen auf den Fahrer können effektiv reduziert werden, so dass eine wesentlich geringe Beeinträchtigung des Fahrers beim Führen des Kraftwagens ermöglicht wird. Beispielsweise kann dadurch ein ungewolltes plötzliches Verreißen des Lenkrads durch den Fahrer verhindert werden, so dass eine besonders sichere Führung des Kraftwagens unterstützt wird. Weiterhin wird ein gesteigerter Komfortgewinn des Kraftwagens dadurch ermöglicht, da weniger und verringerte rückartige Querbeschleunigungen und entsprechende Querkraftänderungen auf den Fahrer und die Insassen des Fahrzeugs einwirken.

Eine vorteilhafte Ausführungsform der Erfindung sieht vor, dass die die Betätigung der Vorderachslenkung des Kraftwagens charakterisierenden Daten, welche von der Sensoreinrichtung bereitgestellt werden, zumindest einen Lenkradwinkel, eine Lenkradwinkelgeschwindigkeit und eine Lenkradwinkelbeschleunigung umfassen. Dadurch werden die wesentlichen Stellparameter, welche durch einen Fahrer des Kraftwagens bei einem Lenkmanöver vorgegeben werden, erfasst.

In weiterer vorteilhafter Ausgestaltung der Erfindung ist es vorgesehen, dass die die Kraftwagenbewegung charakterisierenden Daten, welche von der Sensoreinrichtung bereitgestellt werden, zumindest eine Giergeschwindigkeit, eine Gierbeschleunigung und eine Querbeschleunigung des Kraftwagens umfassen. Damit werden wesentliche Messgrößen von der Sensoreinrichtung erfasst und der Steuereinrichtung bereitgestellt, welche bei einem Lenkmanöver zu beachten sind, um einen Querruckverlauf möglichst genau vorhersagen zu können.

In einer weiteren vorteilhaften Ausführungsform der Erfindung erfolgt das Verändern des Hinterachslenkwinkels in Abhängigkeit von wenigstens einem der Steuereinrichtung zur Verfügung gestellten Kennfeld. In dem Kennfeld können beispielsweise wesentliche Zusammenhänge zwischen den mittels der Sensoreinrichtung erfassten Messgrößen und jeweiligen Fahrzeugeigenschaften bereitgestellt werden. Eine Veränderung des Hinterachslenkwinkels zur Verringerung oder Vermeidung des Querrucks kann dadurch besonders effektiv erfolgen, da beispielsweise kraftwagenspezifische Eigenschaften bei der Veränderung des Hinterachslenkwinkels Berücksichtigung finden.

Eine weitere vorteilhafte Ausführungsform der Erfindung sieht vor, dass Daten über einen Umgebungszustand des Kraftwagens von der Steuereinrichtung empfangen und bei der Veränderung des Hinterachslenkwinkels berücksichtigt werden. Beispielsweise ist es denkbar, dass mittels einer geeigneten Sensoreinrichtung des Kraftwagens eine aktuelle Wetterlage und ggf. auch die Straßenverhältnisse erfasst werden können, welche bei der Veränderung des Hinterachslenkwinkels berücksichtigt werden. Des Weiteren ist es ebenfalls möglich, dass mittels einer geeigneten Sensoreinrichtung des Kraftwagens die Reifeneigenschaften erfasst werden, welche ebenfalls bei der Veränderung des Hinterachslenkwinkels berücksichtigt werden können. Der zu erwartenden Querruckverlauf des Kraftwagens hängt nämlich maßgeblich auch von der Fahrbahnbeschaffenheit in Kombination mit den Reifeneigenschaften ab, so dass dies dabei ebenfalls berücksichtigt werden kann.

Bei einer weiteren vorteilhaften Ausführungsform der Erfindung werden Daten über einen Beladungszustand des Kraftwagens von der Steuereinrichtung empfangen und bei der Veränderung des Hinterachslenkwinkels berücksichtigt. Je nach Beladungszustand des Kraftwagens kann sich nämlich dessen dynamisches Fahrverhalten erheblich ändern, so dass dieses zusätzlich bei der Veränderung des Hinterachslenkwinkels berücksichtigt werden kann. Beispielsweise ist es möglich, dass über eine beim Kraftwagen vorgesehene Luftfederung der Beladungszustand des Kraftwagens ermittelt werden kann oder dass eine Verwendung eines Dachgepäckträgers durch eine entsprechende Sensorik ebenfalls erkannt wird. Der so erkannte Beladungszustand des Kraftwagens kann beispielsweise in Form von variablen Parametern, welche in das zuvor erwähnte Kennfeld Eingang finden können, berücksichtigt werden, so dass die Ermittlung des Querruckverlaufs und auch die Ansteuerung der Hinterachslenkung besonders akkurat erfolgen können.

Eine erfindungsgemäße Vorrichtung für einen eine Hinterachslenkung aufweisenden Kraftwagen umfasst eine Sensoreinrichtung und eine Steuereinrichtung, die miteinander gekoppelt sind, wobei sich die erfindungsgemäße Vorrichtung dadurch auszeichnet, dass
- die Sensoreinrichtung dazu ausgelegt ist, eine Betätigung einer Vorderachslenkung des Kraftwagens und eine Kraftwagenbewegung charakterisierende Daten bereitzustellen;
- die Steuereinrichtung dazu ausgelegt ist, diese Daten zu empfangen und basierend auf den empfangenen Daten ein zu erwartenden Verlauf eines Querrucks des Kraftwagens zu ermitteln; und
- die Steuereinrichtung dazu ausgelegt ist, ein Hinterachslenkwinkel der Hinterachslenkung zu verändern, falls der Verlauf des ermittelten Querrucks einen vorgebbaren Schwellwert überschreitet.

Vorteilhafte Ausführungen des erfindungsgemäßen Verfahrens sind als vorteilhafte Ausführungen der Vorrichtung anzusehen, wobei hier insbesondere die Vorrichtung Mittel umfasst, mit denen die Verfahrensschritte durchführbar sind.

Schließlich ist es bei einer weiteren vorteilhaften Ausführungsform der Erfindung vorgesehen, dass die Steuereinrichtung in einem Steuergerät der Hinterachslenkung vorgesehen ist. Dadurch kann eine besonders platzsparende Anordnung geschaffen werden.

Weitere Vorteile, Merkmale und Einzelheiten der Erfindung ergeben sich aus der nachfolgenden Beschreibung eines bevorzugten Ausführungsbeispiels sowie anhand der Zeichnung. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Die Zeichnung zeigt in:
- Fig. 1: eine schematische Darstellung eines Kraftwagens mit einer Hinterachslenkung sowie einer Sensoreinrichtung und einer Steuereinrichtung, welche miteinander gekoppelt sind;
- Fig. 2: eine schematische Darstellung eines eine Kurve aufweisenden Straßenabschnitts;
- Fig.: 3 drei schematische Ansichten des in Fig. 1 gezeigten Kraftwagens, wobei der Kraftwagen jeweils unterschiedliche Lenkwinkel an der Vorderachse und der Hinterachse aufweist; und in
- Fig. 4: ein Diagramm, in welchem schematisch für den in Fig. 2 gezeigten Streckenverlauf zwei Querbeschleunigungsverläufe für den Kraftwagen aufgetragen sind, wobei einmal ein Verlauf ohne eine Verstellung des Hinterachslenkwinkels und einmal mit einer Verstellung des Hinterachslenkwinkels gemäß den Ansichten in Fig. 3 gezeigt ist.

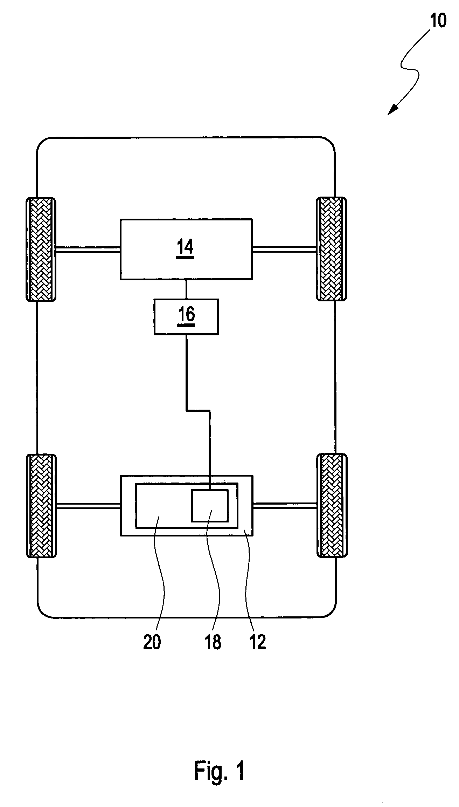

Ein Kraftwagen 10 mit einer Hinterachslenkung 12 und einer Vorderachslenkung 14 ist in einer schematischen Ansicht in Fig. 1 gezeigt. Weiterhin umfasst der Kraftwagen 10 eine Sensoreinrichtung 16 und eine Steuereinrichtung 18, welche miteinander gekoppelt sind. Im vorliegenden Fall ist dabei die Steuereinrichtung 18 in einem Steuergerät 20 der Hinterachslenkung 12 vorgesehen.

Die Sensoreinrichtung 16 ist dazu ausgelegt, eine Betätigung der Vorderachslenkung 14 des Kraftwagens 10 und eine Kraftwagenbewegung charakterisierende Daten bereitzustellen. Bei den die Betätigung der Vorderachslenkung 14 des Kraftwagens 10 charakterisierenden Daten, welche von der Sensoreinrichtung 16 bereitgestellt werden, handelt es sich um einen Lenkradwinkel, eine Lenkradwinkelgeschwindigkeit und eine Lenkradwinkelbeschleunigung. Zudem werden mittels der Sensoreinrichtung 16 eine Giergeschwindigkeit, eine Gierbeschleunigung und eine Querbeschleunigung des Kraftwagens 10 erfasst und an die Steuereinrichtung 18 übermittelt. Des Weiteren wird der Steuereinrichtung 18 ein Kennfeld bereitgestellt, in welchem Zusammenhänge zwischen der Betätigung der Vorderachslenkung 14 und der Hinterachslenkung 12 sowie die Kraftwagenbewegung charakterisierenden Daten bereitgestellt werden.

Weiterhin ist die Sensoreinrichtung 16 dazu geeignet, Daten über einen Umgebungszustand des Kraftwagens 10 zu erfassen und dieser der Steuereinrichtung 18 bereitzustellen. Bei diesen Daten über den Umgebungszustand des Kraftwagens 10 kann es sich beispielsweise um Daten handeln, die eine aktuelle Wetterbedingung und/oder eine Fahrbahnbeschaffenheit, beispielsweise Nässe oder Schnee, und/oder die Reifeneigenschaften erfassen. Die Sensoreinrichtung 16 kann dafür gesonderte hier nicht dargestellte weitere Sensoreinheiten umfassen, um diese Daten aufzunehmen. Beispielsweise kann mittels eines hier nicht dargestellten in dem Kraftwagen 10 vorgesehenen Regensensor eine aktuelle Niederschlagsmenge erfasst werden, aus welcher auf eine aktuelle Wettersituation geschlossen werden kann. Alternativ kann die Fahrbahnbeschaffenheit durch entsprechende Regelungsansätze geschätzt werden. Weiterhin ist es ebenfalls möglich, dass mittels der Sensoreinrichtung 16 bzw. weiterer hier nicht dargestellter Sensoreinheiten Daten über einen Beladungszustand des Kraftwagens 10 erfasst und an die Steuereinrichtung 18 weitergeleitet werden können. Zum Beispiel kann dafür eine hier nicht dargestellte Luftfederung des Kraftwagens 10 genutzt werden, mittels welcher ein aktueller Beladungszustand des Kraftwagens 10 erfasst werden kann. Weiterhin können auch ebenfalls hier nicht dargestellte Sensoreinheiten benutzt werden, mittels welchen eine Nutzung eines Dachgepäckträgersystems und dessen Beladung erfasst werden können. Ferner ist es ebenfalls möglich, dass eine hier nicht dargestellte Sensoreinheit einer Anhängerkupplung des Kraftwagens 10 dazu genutzt wird, zu erfassen, ob ein Anhänger an dem Kraftwagen 10 angebunden ist, wodurch erfasst werden kann, inwiefern der Beladungszustand des Kraftwagens 10 verändert ist.

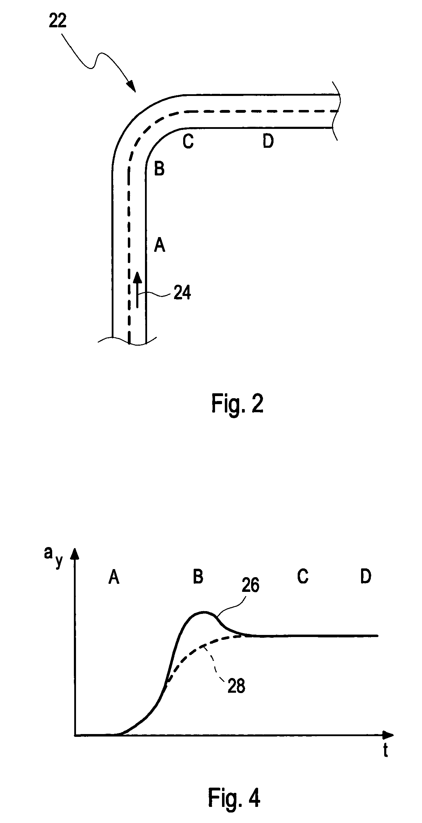

In Fig. 2 ist in einer schematischen Ansicht ein Ausschnitt einer Straße 22 gezeigt, auf welcher der Kraftwagen 10 bewegt werden kann. Entlang der Straße 22 sind drei unterschiedliche Streckenabschnitte A, B, C gekennzeichnet. Weiterhin ist mit einem Pfeil 24 eine Fahrtrichtung des Kraftwagens 10 entlang der Straße 22 gekennzeichnet.

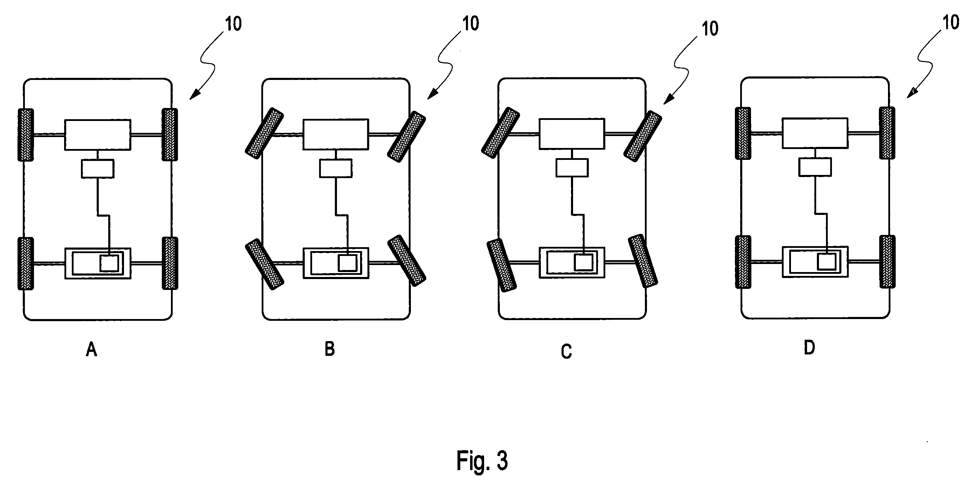

In Fig. 3 ist der bereits in Fig. 1 dargestellte Kraftwagen 10 in vier unterschiedlichen Abbildungen gezeigt, wobei diese Abbildungen jeweils den in Fig. 2 gekennzeichneten Streckenabschnitten A, B, C, D zugeordnet sind. Wie aus Fig. 3 zu erkennen ist, sind sowohl die Vorderräder als auch die Hinterräder des Kraftwagens 10 beim Durchfahren des Streckabschnitts A gerade gestellt bzw. ist mit anderen Worten weder die Vorderachslenkung 14 noch die Hinterachslenkung 12 betätigt. Beim Durchfahren oder Passieren des Streckenabschnitts B ist sowohl die Hinterachslenkung 12 als auch die Vorderachslenkung 14 derart betätigt, dass die Vorder- und Hinterräder einen gleichsinnigen Lenkwinkel aufweisen. Entgegen der vorliegenden Darstellung ist es - je nach Geschwindigkeit des Kraftwagens 10 - ebenfalls möglich, dass die Vorder- und Hinterräder einen gegensinnigen Lenkwinkel aufweisen. Bei Geschwindigkeiten, welche üblicherweise im Stadtverkehr erzielt werden, erfolgt zumeist eine Betätigung der Hinterachselenkung 12 entsprechend der vorliegenden Darstellung. Bei höheren Geschwindigkeiten kann durchaus der gegensätzliche Fall vorgenommen werden. Beim Durchfahren des Streckenabschnitts C sind ebenfalls die Vorderachslenkung 14 und die Hinterachslenkung 12 des Kraftwagens 10 betätigt, wobei die Hinterachslenkung 12 einen geringeren Lenkeinschlag als beim Durchfahren des Streckenabschnitts B aufweist. Hierbei ist es wiederum in Abhängigkeit von der Geschwindigkeit, mit welcher der Kraftwagen 10 bewegt wird, ebenfalls möglich, dass bei zuvor im Streckenabschnitt B gegensinnig betätigten Vorder- und Hinterachslenkungen 14, 12 die Hinterachslenkung 12 einen größeren Lenkausschlag beim Passieren des Streckenabschnitts C als beim Passieren des Streckenabschnitts B aufweist. Sobald der Kraftwagen 10 den Streckenabschnitt D durchfährt, sind die Hinter- und Vorderachslenkung 12, 14 derart betätigt, dass sämtliche Räder wieder gerade gestellt bzw. nicht mehr eingelenkt sind.

In Fig. 4 sind in einem Diagramm zwei Querbeschleunigungsverläufe 26, 28 einer auf den Kraftwagen 10 einwirkenden Querbeschleunigung a_{y} qualitativ über einer Zeit t aufgetragen. Während der Zeit t wird die in Fig. 2 gezeigten Straße 22 durchfahren. Des Weiteren sind in dem Diagramm die Streckenabschnitte A, B, C, D gekennzeichnet, welche in Fig. 2 gekennzeichnet sind.

Der Querbeschleunigungsverlauf 26 entspricht dabei den Werten der Querbeschleunigung a_{y}, welche der Kraftwagen 10 erfährt, wenn er die Straße 22 in Richtung der mit dem Pfeil 24 gekennzeichneten Richtung unter alleiniger Betätigung der Vorderachslenkung 14 oder einer zusätzlichen Betätigung einer herkömmlichen Hinterachslenkung durchfährt. Beim Einfahren in die Kurve wird die Vorderachslenkung 14 des Kraftwagens 10 betätigt, um den Kraftwagen 10 durch die Kurve zu steuern. Dabei wird üblicherweise sowohl der Lenkradwinkel als auch die Lenkradwinkelgeschwindigkeit und die Lenkradwinkelbeschleunigung von einem Fahrer des Kraftwagens fortlaufend verändert. Der Kraftwagen 10 wird dabei auf eine sich verändernde Kreisbahn gelenkt, wodurch sich die Querbeschleunigung ay, welche auf den Kraftwagen 10 einwirkt, qualitativ entsprechend des Querbeschleunigungsverlaufs 26 ändert. Wie aus Fig. 4 ersichtlich, steigt beim Durchfahren der Kurve der Wert der Querbeschleunigung a_{y} gemäß des Querbeschleunigungsverlaufs 26 relativ stark an und weist einen Maximalwert im Streckabschnitt B auf, wonach der Betrag der Querbeschleunigung a_{y} beim Weiterfahren in Richtung des Streckenabschnitts C wieder abfällt.

Die Querbeschleunigung a_{y} bestimmt maßgeblich die Kraft, die auf den Fahrer des Kraftwagens 10 in Querrichtung einwirkt. Eine konstante Querbeschleunigung a_{y} ist dabei für den Fahrer des Kraftwagens 10 bzw. auch weitere Insassen des Kraftwagens 10 innerhalb gewisser Grenzen wesentlich weniger störend als eine Änderung der Querbeschleunigung a_{y}. Allgemein wird eine Änderung einer Beschleunigung über der Zeit als Ruck bezeichnet, so dass eine Änderung der Querbeschleunigung a_{y} über der Zeit bzw. eine Ableitung der Querbeschleunigung a_{y} nach der Zeit einem Querruck entspricht. Ein besonders großer Querruck geht dabei mit einer großen Querbeschleunigungsänderung einher, welche auf den Fahrer bzw. auf die Fahrzeuginsassen des Kraftwagens 10 einwirken. In dem Bereich, in dem der Querbeschleunigungsverlauf 26 die größte Steigung aufweist, tritt der größte Querruck auf. Wie aus Fig. 4 zu erkennen ist, wäre dies in einem Bereich zwischen dem Streckenabschnitt A und dem Streckenabschnitt B der Fall.

Der Querbeschleunigungsverlauf 28 zeigt den Verlauf der Querbeschleunigung a_{y} an, welcher sich beim Durchfahren der in Fig. 2 gezeigten Straße 22 ergibt, wenn bereichsweise sowohl die Vorderachslenkung 14 als auch die Hinterachslenkung 12 des Kraftwagens 10 gemäß den Abbildungen in Fig. 3 betätigt wird. Mittels der Sensoreinrichtung 16 des Kraftwagens 10 werden Daten bereitgestellt, welche eine Betätigung der Vorderachslenkung 14 des Kraftwagens 10 und eine Kraftwagenbewegung des Kraftwagens 10 charakterisieren. Im vorliegenden Fall werden von der Sensoreinrichtung 16 der Lenkradwinkel, die Lenkradwinkelgeschwindigkeit und die Lenkradwinkelbeschleunigung erfasst und der Steuereinrichtung 18 bereitgestellt. Zudem werden von der Sensoreinrichtung 16 die Giergeschwindigkeit, die Gierbeschleunigung und die Querbeschleunigung des Kraftwagens 10 während des Befahrens der Straße 22 gemessen und diese Daten ebenfalls der Steuereinrichtung 18 bereitgestellt.

Basierend auf den empfangenen Daten ermittelt die Steuereinrichtung 18 einen zu erwartenden Verlauf des Querrucks des Kraftwagens 10. In diesem Zusammenhang kann insbesondere von einem zu erwartenden Verlauf des Querrucks gesprochen werden, da der Kraftwagen 10 gewisse Elastizitäten und Trägheiten aufweist, so dass ein Lenkbefehl des Fahrers nicht unmittelbar in eine entsprechende Richtungsänderung des Kraftwagens 10 umgesetzt wird. Mit anderen Worten verändern sich die Giergeschwindigkeit, die Gierbeschleunigung und die Querbeschleunigung des Kraftwagens 10 zeitverzögert zu einer Änderung des Lenkradwinkels, der Lenkradwinkelgeschwindigkeit und der Lenkradwinkelbeschleunigung.

Nach dem Ermitteln des zu erwartenden Querrucks bzw. des Verlaufs des zu erwartenden Querrucks bestimmt die Steuereinrichtung 18, ob der ermittelte zu erwartende Verlauf des Querrucks einen vorgegebenen Schwellwert für den Querruck überschreitet. In Abhängigkeit davon wird der Hinterachslenkwinkel der Hinterachslenkung 12 des Kraftwagens 10 mittels der Steuereinrichtung 18 verändert, wobei die Steuereinrichtung 18 dabei zusätzlich auf das dieser zur Verfügung gestellte Kennfeld zurückgreift, in welchem Zusammenhänge zwischen der Betätigung der Vorderachslenkung 14 und der Hinterachslenkung 12 sowie die Kraftwagenbewegung charakterisierenden Daten bereitgestellt sind.

Wie aus Fig. 4 ersichtlich, ist der Querbeschleunigungsverlauf 28 ein anderer als der Querbeschleunigungsverlauf 26 und somit unterscheiden sich auch die daraus resultierenden Verläufe des Querrucks, welcher jeweils aus den beiden Querbeschleunigungsverläufen 26, 28 durch eine zeitliche Ableitung ermittelt werden kann.

Der Kraftwagen 10 wird also zunächst mit gerade gestellten Vorder- und Hinterrädern auf die Kurve zu bewegt, wobei beim Durchfahren des Streckenabschnitts B die Hinterachslenkung 12 und die Vorderachslenkung 14 gleichsinnig betätigt werden. Durch die Betätigung der Hinterachslenkung 12 kann ein Querruck erheblich verringert werden, welcher ohne Betätigung der Hinterachslenkung 12 sonst auf den Kraftwagen 10 einwirken würde. Idealerweise wird die Hinterachslenkung 12 dabei derart betätigt, dass die Hinterräder des Kraftwagens 10 in dem Moment einen gewünschten Lenkwinkeleinschlag aufweisen, in welchem sonst eine Überschreitung des vorgegebenen Schwellwerts für den Querruck auftreten würde. Bei einer Weiterfahrt des Kraftwagens von dem Streckenabschnitt B zu dem Streckenabschnitt C wird die Hinterachslenkung 12 derart betätigt, dass diese wieder einen verringerten Lenkeinschlag aufweist, bis die Kurve vollständig durchfahren worden ist und die Hinterachslenkung 12 derart betätigt wird, dass die Hinterräder des Kraftwagens 10 beim Durchfahren des Streckenabschnitts D wieder gerade gestellt sind.

## Patentansprüche

1. Verfahren zum Betreiben eines Kraftwagens (10) mit einer Hinterachslenkung (12), welches folgende Schritte umfasst:
- Bereitstellen von Daten, welche eine Betätigung einer Vorderachslenkung (14) des Kraftwagens (10) und eine Kraftwagenbewegung charakterisieren, mittels einer Sensoreinrichtung (16) des Kraftwagens (10);
- Empfangen der Daten mittels einer Steuereinrichtung (18) des Kraftwagens (10);
- Ermitteln eines zu erwartenden Verlaufs eines Querrucks des Kraftwagens (10) basierend auf den Daten mittels der Steuereinrichtung (18);
- Bestimmen, ob der ermittelte zu erwartende Verlauf des Querrucks einen vorgegebenen Schwellwert für den Querruck überschreitet, mittels der Steuereinrichtung (18); und
- Verändern eines Hinterachslenkwinkels der Hinterachslenkung (12) des Kraftwagens (10) mittels der Steuereinrichtung (18), falls der Verlauf des ermittelten zu erwartenden Querrucks den vorgegebenen Schwellwert überschreitet.

2. Verfahren nach Anspruch 1,
**dadurch gekennzeichnet, dass**
die die Betätigung der Vorderachslenkung (14) des Kraftwagens (10) charakterisierenden Daten, welche von der Sensoreinrichtung (16) bereitgestellt werden, zumindest einen Lenkradwinkel, eine Lenkradwinkelgeschwindigkeit und eine Lenkradwinkelbeschleunigung umfassen.

3. Verfahren nach Anspruch 1 oder 2,
**dadurch gekennzeichnet, dass**
die die Kraftwagenbewegung charakterisierenden Daten, welche von der Sensoreinrichtung (16) bereitgestellt werden, zumindest eine Giergeschwindigkeit, eine Gierbeschleunigung und eine Querbeschleunigung des Kraftwagens (10) umfassen.

4. Verfahren nach einem der vorhergehenden Ansprüche,
**dadurch gekennzeichnet, dass**
das Verändern des Hinterachslenkwinkels in Abhängigkeit von wenigstens einem der Steuereinrichtung (18) zur Verfügung gestellten Kennfeld erfolgt.

5. Verfahren nach einem der vorhergehenden Ansprüche,
**dadurch gekennzeichnet, dass**
Daten über einen Umgebungszustand des Kraftwagens (10) von der Steuereinrichtung (18) empfangen und bei der Veränderung des Hinterachslenkwinkels berücksichtigt werden.

6. Verfahren nach einem der vorhergehenden Ansprüche,
**dadurch gekennzeichnet, dass**
Daten über einen Beladungszustand des Kraftwagens (10) von der Steuereinrichtung (18) empfangen und bei der Veränderung des Hinterachslenkwinkels berücksichtigt werden.

7. Vorrichtung für einen eine Hinterachslenkung (12) aufweisenden Kraftwagen (10), mit einer Sensoreinrichtung (16) und einer Steuereinrichtung (18), welche miteinander gekoppelt sind,
**dadurch gekennzeichnet, dass**
- die Sensoreinrichtung (16) dazu ausgelegt ist, eine Betätigung einer Vorderachslenkung (14) des Kraftwagens (10) und eine Kraftwagenbewegung charakterisierende Daten bereitzustellen;
- die Steuereinrichtung (18) dazu ausgelegt ist, diese Daten zu empfangen und basierend auf den empfangenen Daten einen zu erwartenden Verlauf eines Querrucks des Kraftwagens (10) zu ermitteln; und
- die Steuereinrichtung (18) dazu ausgelegt ist, einen Hinterachslenkwinkel der Hinterachslenkung (12) zu verändern, falls der Verlauf des ermittelten Querrucks einen vorgebbaren Schwellwert überschreitet.

8. Vorrichtung nach Anspruch 7,
**dadurch gekennzeichnet, dass**
die Steuereinrichtung (18) in einem Steuergerät (20) der Hinterachslenkung (12) vorgesehen ist.

## Claims

1. Method for operating a motor vehicle (10) with a rear-wheel steering system (12) comprising of the following steps:
- provision of data that specify the activation of a motor vehicle's (10) front-wheel steering system (14) by means of a sensor device (16) on the motor vehicle (10);
- reception of data using a control device (18) on the motor vehicle (10);
- detection of the expected course of the motor vehicle's (10) impact jolt in a lateral direction based on the data using the control device (18);
- determination of whether the detected expected course of the impact jolt in a lateral direction exceeds a specified threshold value for the impact jolt in a lateral direction by means of the control device (18); and
- change of a rear-wheel steering angle of the motor vehicle's (10) rear-wheel steering system (12) by means of the control device (18) in case the course of the detected crosswise impact jolt to be expected exceeds the specified threshold value.

2. Method according to claim 1, **characterised by** the fact that
the data specifying the activation of the motor vehicle's (10) front-wheel steering system (14) that is provided by the sensor device (16) include at least the indication of the steering-wheel angle, steering-wheel velocity and steering-wheel acceleration.

3. Method according to claim 1 or 2 **characterised by** the fact that
the data specifying the motor vehicle's movement that are provided by the sensor device (16) include at least an indication of the vehicle's (10) yaw velocity, yaw acceleration and lateral acceleration.

4. Method according to one of the previously stated claims **characterised by** the fact that the change of the rear-wheel steering angle is made depending on at least one of the engine characteristics provided by the control unit (18).

5. Method according to one of the previously stated claims **characterised by** the fact that data regarding the ambient conditions of the motor vehicle (10) are received by the control unit (18) taking a change in the rear-wheel steering angle into consideration.

6. Method according to one of the previously stated claims **characterised by** the fact that data regarding the loading conditions of the vehicle (10) are received by the control unit (18) taking a change in the rear-wheel steering angle into consideration.

7. Device for a motor vehicle (10) with rear-wheel steering (12) with a sensor device (16) and a control device (18) that are coupled with one another, **characterised by** the fact that
- the sensor device (16) has been designed to provide data for activating a front-wheel steering system (14) of the motor vehicle (10) and data that characterises the motor vehicle's movement.
- the control unit (18) has been designed to receive this data and, based on the data received, to detect the expected course of a vehicle's (10) impact jolt in a lateral direction; and
- the control unit (18) has been designed to change the rear-wheel steering angle of the rear-wheel steering (12) in the event that the course of the expected impact jolt in a lateral direction exceeds a specified threshold.

8. Device according to claim 7 **characterised by** the fact that
the control device (18) has been provided in a control unit (20) of the rear-wheel steering system (12).

## Revendications

1. Procédé de fonctionnement d'un véhicule automobile (10) avec une direction d'essieu arrière (12), qui comprend les étapes suivantes :
- préparation de données, qui caractérisent un actionnement d'une direction d'essieu avant (14) du véhicule automobile (10) et un mouvement du véhicule automobile, au moyen d'un dispositif capteur (16) du véhicule automobile (10) ;
- réception des données au moyen d'un dispositif de commande (18) du véhicule automobile ;
- détermination d'une allure escomptée d'une suraccélération transversale du véhicule automobile (10) sur la base des données, au moyen du dispositif de commande (18) ;
- détermination du fait que l'allure escomptée déterminée de la suraccélération transversale dépasse ou ne dépasse pas une valeur de seuil prédéterminée pour la suraccélération transversale, au moyen du dispositif de commande (18) ;
- modification d'un angle de direction d'essieu arrière de la direction d'essieu arrière (12) du véhicule automobile (10) au moyen du dispositif de commande (18) si l'allure de la suraccélération escomptée déterminée dépasse la valeur de seuil prédéterminée.

2. Procédé selon la revendication 1, **caractérisé en ce que** les données caractérisant l'actionnement de la direction d'essieu avant (14) du véhicule automobile (10), lesquelles données sont préparées par le dispositif capteur (16), comprennent au moins un angle de rotation de volant, une vitesse d'angle de rotation de volant et une accélération d'angle de rotation de volant.

3. Procédé selon la revendication 1 ou 2, **caractérisé en ce que** les données caractérisant le mouvement du véhicule automobile, lesquelles données sont préparées par le dispositif capteur (16), comprennent au moins une vitesse de lacet, une accélération de lacet et une accélération transversale du véhicule automobile (10).

4. Procédé selon l'une des revendications précédentes, **caractérisé en ce que** la modification de l'angle de direction d'essieu arrière s'effectue en fonction d'au moins un réseau de caractéristiques mis à disposition par le dispositif de commande (18).

5. Procédé selon l'une des revendications précédentes, **caractérisé en ce que** des données concernant un état de l'environnement du véhicule automobile (10) sont reçues par le dispositif de commande (18) et sont prises en compte lors de la modification de l'angle de direction d'essieu arrière.

6. Procédé selon l'une des revendications précédentes, **caractérisé en ce que** des données concernant un état de charge du véhicule automobile (10) sont reçues par le dispositif de commande (18) et sont prises en compte lors de la modification de l'angle de direction d'essieu arrière.

7. Dispositif pour un véhicule automobile (10) comportant une direction d'essieu arrière (12), avec un dispositif capteur (16) et avec un dispositif de commande (18), lesquels sont couplés ensemble,
**caractérisé en ce que**
- le dispositif capteur (16) est conçu pour préparer des données caractérisant un actionnement d'une direction d'essieu avant (14) du véhicule automobile (10) et un mouvement du véhicule automobile ;
- le dispositif de commande (18) est conçu pour recevoir ces données et déterminer sur la base des données reçues une allure escomptée d'une suraccélération transversale du véhicule automobile (10) ; et
- le dispositif de commande (18) est conçu pour modifier un angle de direction d'essieu arrière de la direction d'essieu arrière (12) si l'allure de la suraccélération transversale déterminée dépasse une valeur de seuil prédéterminée.

8. Dispositif selon la revendication 7, **caractérisé en ce que** le dispositif de commande (18) est prévu dans un appareil de commande (20) de la direction d'essieu arrière (12).
